# EUROPÄISCHE PATENTSCHRIFT

(11) **EP 2 367 396 B1**
(45) Veröffentlichungstag und Bekanntmachung des Hinweises auf die Patenterteilung: **21.06.2017**
(21) Anmeldenummer: 10181403.6
(22) Anmeldetag: 23.07.1999
(51) Int. Cl.: H04W 88/02

(54) **Verfahren zur Übertragung von digitalen Nutzdaten**
Method for transferring digital reference data
Procédé de transmission de données utiles numériques

(30) Priorität: 24.07.1998 DE 19833318
(43) Veröffentlichungstag der Anmeldung: 21.09.2011
(62) Teilanmeldung aus: 07106643.5
(73) Patentinhaber: IPCom GmbH & Co. KG, 82049 Pullach (DE)
(72) Erfinder: Laumen, Josef, 85375, Neufahrn (DE); Hans, Martin, 31162, Bad Salzdetfurth (DE); Lappe, Dirk, 76228, Karlsruhe (DE)
(74) Vertreter: Tomlinson, Edward James

(56) Entgegenhaltungen:
- EP-A1- 0 849 965
- WO-A1-96/23297
- US-A- 5 414 796
- RAPELI J: "UMTS: TARGETS, SYSTEM CONCEPT, AND STANDARDIZATION IN A GLOBAL FRAMEWORK. ÖADDRESSING REQUIREMENTS FOR TELECOMMUNICATIONS AFTER THE YEAR 2000", IEEE PERSONAL COMMUNICATIONS, IEEE COMMUNICATIONS SOCIETY, US, Bd. 2, Nr. 1, 1. Februar 1995 (1995-02-01) , Seiten 20-28, XP000489276, ISSN: 1070-9916, DOI: DOI:10.1109/98.350860
- "Digital cellular telecommunications system (Phase 2+); Tandem Free Operation (TFO); Service description; Stage 2 (GSM 03.53 version 7.0.0 Release 1998) Approved by SMG as SMG version only, not for publication; GSM 03.53", ETSI STANDARDS, LIS, SOPHIA ANTIPOLIS CEDEX, FRANCE, Nr. V7.0.0, 1. Mai 1998 (1998-05-01), XP014018502, ISSN: 0000-0001
- "Digital cellular telecommunications system; (GSM Radio Access Phase 3); Physical layer on the radio path; General description (GSM 05.01 version 6.0.0); TS 101 157", ETSI STANDARDS, LIS, SOPHIA ANTIPOLIS CEDEX, FRANCE, Bd. SMG2, Nr. V6.0.0, 1. Januar 1998 (1998-01-01), XP014015852, ISSN: 0000-0001

## Beschreibung

### Stand der Technik

Die Erfindung geht von einer Zwischenstation zur Übertragung von digitalen Nutzdaten nach der Gattung des Hauptanspruchs aus.

Verfahren zur Übertragung von digitalen Nutzdaten von einer ersten Mobilstation zu einer zweiten Mobilstation sind bereits bekannt und beispielsweise gemäß dem GSM-Standard (Global System for Mobile Communications) für Sprachübertragung realisiert.

In der "IEEE Veröffentlichung UMTS: Targets, System Concept, Standardisation in a Global Framework", IEEE COMMUNICATIONS SOCIETY, US, Bd. 2, Nr. 1, 1. Februar 1995, Seiten 20 - 28, wird ein Konzept für einen neuen Mobilfunkdienst, UMTS, vorgestellt. Darin wird neben den wesentlichen Leistungsverbesserungen von UMTS gegenüber bisherigen Systemen, z.B. durch Einführung von Multimedia, auch die Interoperabilität zwischen den verschiedenen Systemen diskutiert. Insbesondere werden diverse Möglichkeiten zur Nutzung verschiedener Systeme durch den Benutzer gezeigt, z.B. durch SIM Roaming oder Multiple Mode Terminals. Daneben wird betont, dass auch vorhandene Systeme, z.B. GSM, ihre Funktionalität in Richtung UMTS weiterentwickeln werden.

In der Spezifikation GSM 03.53, V7.0.0, betitelt Tandem Free Operation, findet sich eine Dienstbeschreibung für den tandemfreien Betrieb. Diese ist lediglich für Sprachübertragung geeignet. Ziel ist es, durch In-Band Signalisierung in Sprachverbindungen zwischen Mobilstationen die Sprachqualität im GSM System zu verbessern. Dies geschieht durch Entfernen der Sprachdekodierung und Sprachkodierung in den Basisstationen.

Aus der WO 96/23297 sind ein Verfahren und eine Vorrichtung zum Entdecken und Umgehen von Tandem Sprachkodierung bekannt. Wenn beide Gesprächspartner den gleichen Sprach-Codec benutzen, klingt das resultierende Sprachausgabesignal besser, wenn die Tandem Sprachkodierung vermieden wird. Dazu tauschen die lokalen Sprachcodecs Kennungscodes aus, bei deren gegenseitiger Entdeckung paketierte Sprachdaten und Redundanzinformationen die Least Significant Bits vom gesendeten PCM Sample ersetzen. Wenn die Redundanzüberprüfung der Sprachcodecs gültige paketierte Daten empfangen, stoppt der lokale Sprachcodec seine PCM Aussendung.

Aus der US 5,414,796 ist ein Sprach-Codec mit variabler Kodierungssprache von digitalisierten Sprachsignalen bekannt. Das Maß der Sprachaktivität für jeden Frame wird festgestellt. Entsprechend wird eine Ausgabepaket-Datenrate ausgewählt aus einer Auswahl von Datenraten, wobei die niedrigste Datenrate einem Minimum von Sprachaktivitäten entspricht.

### Vorteile der Erfindung

Die Erfindung bezieht sich auf eine Zwischenstation gemäß den Merkmalen von Anspruch 1.

Die erfindungsgemäße Zwischenstation mit den Merkmalen von Anspruch 1 hat den Vorteil, dass bei einer Übertragung digitaler Nutzdaten von einer ersten Mobilstation über die Zwischenstation an eine zweite Mobilstation die Zwischenstation Signalisierungsdaten an die zweite Mobilstation überträgt, wobei die Signalisierungsdaten Informationen über die Art der Kodierung der Nutzdaten in der ersten Stufe nach dem ersten Mobilfunkstandard in Form einer Rufnummer der ersten Mobilstation enthalten, und dass die Zwischenstation die Signalisierungsdaten ein- oder mehrmalig über einen separaten Kontrollkanal an die zweite Mobilstation überträgt.

Somit können die von der zweiten Mobilstation in der zweiten Stufe kanaldekodierten Nutzdaten in Abhängigkeit der Signalisierungsdaten einem ersten Quelldecoder nach einem ersten Mobilfunkstandard für eine Dekodierung in der ersten Stufe oder einem zweiten Quelldecoder nach dem zweiten Mobilfunkstandard für eine Dekodierung in der ersten Stufe zugeführt werden. Auf diese Weise werden die in der Zwischenstation empfangenen Nutzdaten lediglich in der zweiten Stufe dekodiert, nicht jedoch in der ersten Stufe. Eine Kodierung in der ersten Stufe für die Übertragung der Nutzdaten im zweiten Telekommunikationsnetz ist dann nicht erforderlich. Eine Dekodierung in der ersten Stufe der in der zweiten Mobilstation empfangenen Nutzdaten kann dann durch Auswertung der von der Zwischenstation mitübertragenen Signalisierungsdaten erfolgen. Eine Transkodierung zwischen verschiedenen Codes für die Kodierung in der ersten Stufe zur Übertragung im jeweiligen Telekommunikationsnetz kann somit vermieden werden, wodurch Rechenaufwand eingespart und der bei einer Transkodierung sich ergebende Nutzdatenverlust vermieden werden kann.

Durch die in den Unteransprüchen aufgeführten Maßnahmen sind vorteilhafte Weiterbildungen und Verbesserungen der im Hauptanspruch angegebenen Zwischenstation möglich.

Besonders vorteilhaft ist es, dass die erfindungsgemäße Zwischenstation eingerichtet ist, Nutzdaten zu empfangen, wobei die Nutzdaten im ersten Telekommunikationsnetz nach einem ersten Mobilfunkstandard, insbesondere nach dem GSM-Standard (Global System for Mobile Communications), in der ersten und in der zweiten Stufe kodiert sind, vorzugsweise quell- und kanalkodiert, die so empfangenen Nutzdaten in der zweiten Stufe nach einem ersten Mobilfunkstandard zu kanaldekodieren und sie anschließend im zweiten Telekommunikationsnetz nach einem zweiten Mobilfunkstandard, insbesondere nach dem UMTS-Standard (Universal Mobile Telecommunications System), in der zweiten Stufe zu kanalkodieren, und die nach dem zweiten Mobilfunkstandard in der zweiten Stufe kanalkodierten Nutzdaten an die zweite Mobilstation zu senden, wobei die von der zweiten Mobilstation in der zweiten Stufe dekodierten, vorzugsweise kanaldekodierten, Nutzdaten von der zweiten Mobilstation nach Auswertung der Signalisierungsdaten nach dem ersten Mobilfunkstandard in der ersten Stufe dekodiert, vorzugweise quelldekodiert werden.

Auf diese Weise können Nutzdaten zwischen Mobilstationen mit jeweils einer nach unterschiedlichem Mobilfunkstandard realisierten Luftschnittstelle übertragen werden, ohne das eine Transkodierung der Nutzdaten bezüglich des Codes für die Kodierung in der ersten Stufe erforderlich wäre, vorausgesetzt die zweite Mobilstation, die die Nutzdaten empfängt, ist in der Lage, eine Dekodierung der empfangenen Nutzdaten in der ersten Stufe nach dem ersten Mobilfunkstandard durchzuführen.

### Zeichnung

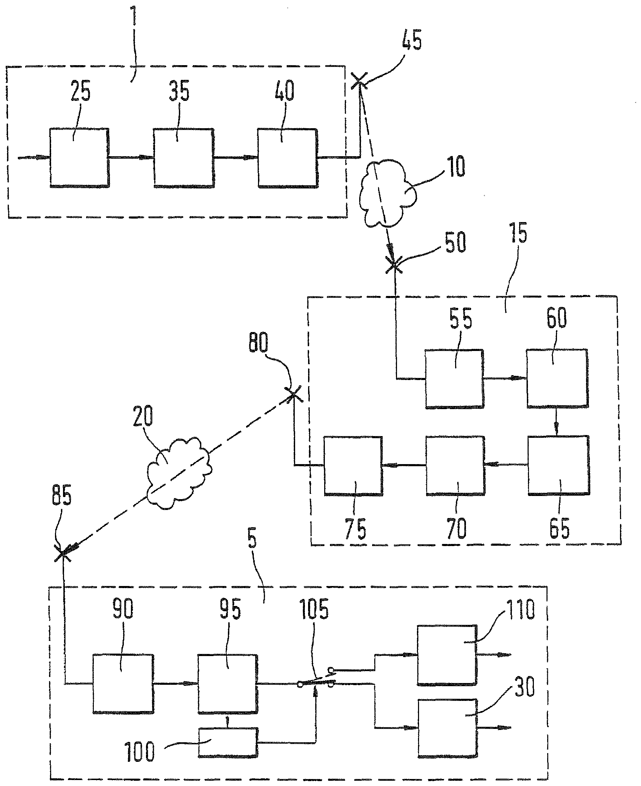

Ein Ausführungsbeispiel der Erfindung ist in der Zeichnung dargestellt und in der nachfolgenden Beschreibung näher erläutert. Es zeigt die einzige Figur ein Blockschaltbild für die Übertragung von Nutzerdaten von einer ersten Mobilstation über eine Zwischenstation zu einer zweiten Mobilstation über verschiedene Telekommunikationsnetze.

### Beschreibung des Ausführungsbeispiels

In der Figur kennzeichnet 1 eine erste Mobilstation, die nach einem ersten Mobilfunkstandard realisiert ist. Bei dem ersten Mobilfunkstandard kann es sich beispielsweise um den GSM-Standard (Global System for Mobile Communications) handeln. Die erste Mobilstation 1 soll im folgenden als GSM-Mobilstation ausgebildet sein. In der Figur sind lediglich die zur Beschreibung des erfindungsgemäßen Verfahrens erforderlichen Funktionsblöcke der ersten Mobilstation 1 dargestellt. Die erste Mobilstation 1 umfasst dabei einen als Quellkodierer ausgebildeten Kodierer 25 für eine Kodierung in einer ersten Stufe, der nach dem ersten Mobilfunkstandard, im beschriebenen Beispiel nach dem GSM-Standard ausgebildet ist. Der Quellkodierer 25 ist über einen ersten als Kanalkodierer ausgebildeten Kodierer 35 für eine Kodierung in einer zweiten Stufe, der ebenfalls nach dem ersten Mobilfunkstandard realisiert ist, mit einer ersten Sende-/Empfangseinheit 40 verbunden, an die eine erste Sende-/Empfangsantenne 45 angeschlossen ist. Von der ersten Sende-/Empfangsantenne 45 können Funksignale nach dem ersten Mobilfunkstandard über ein erstes Telekommunikationsnetz 10, das im beschriebenen Ausführungsbeispiel als GSM-Netz ausgebildet ist, an eine zweite Sende-/Empfangsantenne 50 einer Zwischenstation 15 übertragen werden. Die Zwischenstation 15 umfasst dabei eine zweite Sende-/Empfangseinheit 55, an die die zweite Sende-/Empfangsantenne 50 angeschlossen ist. Die zweite Sende-/Empfangseinheit 55 ist mit einem ersten als Kanaldekodierer ausgebildeten Dekodierer 60 für eine Dekodierung in der zweiten Stufe verbunden, der an eine Steuerung 65 der Zwischenstation 15 angeschlossen ist. Die Steuerung 65 ist über einen zweiten als Kanalkodierer ausgebildeten Kodierer 70 für die Kodierung in der zweiten Stufe mit einer dritten Sende-/Empfangseinheit 75 der Zwischenstation 15 verbunden, an die eine dritte Sende-/Empfangsantenne 80 angeschlossen ist. Von der dritten Sende-/Empfangsantenne 80 werden Funksignale nach einem zweiten Mobilfunkstandard über ein zweites Telekommunikationsnetz 20 an eine zweite Mobilstation 5 übertragen. Bei dem zweiten Mobilfunkstandard kann es sich beispielsweise um den UMTS-Standard (Universal Mobile Telecommunications System) handeln. Die Figur zeigt auch für die Zwischenstation 15 nur die für die Beschreibung des erfindungsgemäßen Verfahrens erforderlichen Funktionsblöcke. Dasselbe gilt für die zweite Mobilstation 5, die die Funksignale von der Zwischenstation 15 über eine vierte Sende-/Empfangsantenne 85 empfängt. Die zweite Mobilstation 5 umfasst eine vierte Sende-/Empfangseinheit 90, an die die vierte Sende-/Empfangsantenne 85 angeschlossen ist. Die vierte Sende-/Empfangseinheit 90 ist außerdem mit einem zweiten als Kanaldekodierer ausgebildeten Dekodierer 95 für die Dekodierung in der zweiten Stufe verbunden, an den eine Auswerteeinheit 100 angeschlossen ist. Der zweite Kanaldekodierer 95 ist über einen von der Auswerteeinheit 100 steuerbaren Schalter 105 entweder mit einem ersten als Quelldekodierer ausgebildeten Dekodierer 30 für eine Dekodierung in der ersten Stufe oder mit einem zweiten als Queildekodierer ausgebildeten Dekodierer 110 für die Dekodierung in der ersten Stufe verbindbar. Der erste Quelldekodierer 30 ist dabei nach dem ersten Mobilfunkstandard realisiert und der zweite Quelldekodierer 110 ist nach dem zweiten Mobilfunkstandard realisiert. Im folgenden soll für den zweiten Mobilfunkstandard beispielhaft der UMTS-Standard gewählt werden, so dass die zweite Mobilstation 5 zumindest teilweise als GSM-/UMTS-Mobilstation ausgebildet ist. Dem Quellkodierer 25 werden digitale Nutzdaten zugeführt, bei denen es sich um Videodaten, um Audiodaten, um Textdaten, um Sprachdaten und/oder um sonstige beliebige Daten handeln kann. Im folgenden wird die Übertragung von Nutzdaten zwischen der ersten Mobilstation 1 und der zweiten Mobilstation 5 beispielhaft anhand der Übertragung von Sprachdaten beschrieben. Der Quellkodierer 25 ist dann als Sprachkodierer nach dem ersten Mobilfunkstandard, in diesem Beispiel nach dem GSM-Standard ausgebildet. Dabei kann dem Sprachkodierer 25 der GSM-Standard ITU-T G.729 zugrunde gelegt sein. Der Sprachkodierer 25 führt eine Quellkodierung der ihm zugeführten als Sprachdaten ausgebildeten Nutzdaten gemäß dem GSM-Standard durch. Die auf diese Weise quellkodierten Sprachdaten werden dem ersten Kanalkodierer 35 zugeführt, der eine Kanalkodierung der Sprachdaten, beispielsweise eine Faltungskodierung und eine Blockkodierung, gemäß dem GSM-Standard durchführt. Die auf diese Weise quell- und kanalkodierten Sprachdaten werden dann über die erste Sende-/Empfangseinheit 40 von der ersten Sende-/Empfangsantenne 45 in Form eines ersten Bitstroms über einen Übertragungskanal des ersten, als GSM-Netz ausgebildeten Telekommunikationsnetzes 10 zur Zwischenstation 15 übertragen. Der von der zweiten Sende-/Empfangsantenne 50 empfangene Bitstrom wird dann über die zweite Sende-/Empfangseinheit 55 dem ersten Kanaldekodierer 60 zugeführt. Die erste Sende-/Empfangsantenne 45 bildet dabei mit der zweiten Sende-/Empfangsantenne 50 eine sogenannte GSM-Luftschnittstelle. Die quell- und kanalkodierten Sprachdaten des ersten Bitstroms werden dann im ersten Kanaldekodierer 60 nach dem GSM-Standard kanaldekodiert. Die auf diese Weise kanaldekodierten Sprachdaten sind dabei weiterhin quellkodiert und werden der Steuerung 65 zugeführt. Mit den Sprachdaten wurden von der ersten Mobilstation 1 zur Zwischenstation 15 Rufidentifikationsdaten übertragen, die die zweite Mobilstation 5 als Zielteilnehmer für die zu übertragenden Sprachdaten identifizieren. Diese Rufidentifikationsdaten wurden dabei beispielsweise in einer in der Figur nicht dargestellten Steuerung der ersten Mobilstation 1 erzeugt, vom ersten Kanalkodierer 40 kanalkodiert und im ersten Bitstrom zusammen mit den Sprachdaten an die Zwischenstation 15 übertragen. Zusammen mit den Sprachdaten werden diese Rufidentifikationsdaten dann vom ersten Kanaldekodierer 60 auch kanaldekodiert und ebenfalls der Steuerung 65 zugeführt. Die Rufinformationsdaten können von der ersten Mobilstation 1 zur Zwischenstation 15 auch ein- oder mehrmalig über einen separaten Kontrollkanal getrennt von den Sprachdaten übertragen werden und die Rufnummer der zweiten Mobilstation 5 als Zielstation umfassen. Die Steuerung 65 detektiert diese Rufidentifikationsdaten und ermittelt daraus als Zielteilnehmer für die von der ersten Mobilstation 1 zu übertragenden Sprachdaten die zweite Mobilstation 5. Dabei ist in der Steuerung 65 bekannt, dass zur Übertragung der Sprachdaten von der Zwischenstation 15 an die zweite Mobilstation 5 ein Übertragungskanal im zweiten Telekommunikationsnetz 20 einzurichten ist Die Übertragung der Sprachdaten im zweiten Telekommunikationsnetz 20 erfolgt dabei nach dem zweiten Mobilfunkstandard, in dem beschriebenen Ausführungsbeispiel nach dem UMTS-Standard. Die dritte Sende-/Empfangsantenne 80 und die vierte Sende-/Empfangsantenne 85 stellen somit eine UMTS-Luftschnittstelle dar. In der Steuerung 65 ist außerdem bekannt, dass die zweite Mobilstation 5 sowohl nach dem GSM-Standard quellkodierte als auch nach dem UMTS-Standard quellkodierte Nutzsignale dekodieren kann. Die Steuerung 65 wählt daher einen Datenübertragungsdienst nach dem UMTS-Standard aus, bei dem die kanaldekodierten aber noch nach dem GSM-Standard quellkodierten Sprachdaten in einen zweiten Bitstrom nach UMTS-Standard eingebettet werden.

Die Zwischenstation 15 kann auch die Möglichkeit einer Quelldekodierung von empfangenen Nutzdaten nach GSM-Standard aufweisen. In diesem Fall ist es sinnvoll, mit den Rufidentifikationsdaten beispielsweise auch die Rufnummer der rufenden ersten Mobilstation 1 an die Zwischenstation 15 zu übertragen und in Abhängigkeit der Detektion dieser Rufnummer in der Steuerung 65 auf eine Quelldekodierung der empfangenen Nutzdaten in der Zwischenstation 15 zu verzichten.

In den zweiten Bitstrom werden außerdem von der Steuerung 65 Signalisierungsdaten eingebettet, wobei die Signalisierungsdaten Informationen über die Art der Quellkodierung der Nutzdaten enthalten. Die Signalisierungsdaten geben somit an, dass die im beschriebenen Beispiel als Sprachdaten vorliegende Nutzdaten nach dem GSM-Standard quellkodierte sind. Im zweiten Kanalkodierer 70 werden die Sprachdaten und die Signalisierungsdaten des zweiten Bitstroms nach dem UMTS-Standard für die Übertragung im zweiten Telekommunikationsnetz 20 kanalkodiert, beispielsweise ebenfalls durch eine Faltungskodierung und eine Blockkodierung. Über die dritte Sende-/Empfangseinheit 75 werden die auf diese Weise kanalkodierten Sprachdaten und Signalisierungsdaten des zweiten Bitstroms über einen Übertragungskanal des zweiten Telekommunikationsnetzes, das in diesem Beispiel als UMTS-Netz ausgebildet ist, zur zweiten Mobilstation 5 übertragen. Bei dem von der Steuerung 65 gewählten Datenübertragungsdienst nach UMTS-Standard muss die Übertragungsqualität und -datenrate geeignet gewählt sein, um die noch nach GSM-Standard quellkodierten Sprachdaten zu übertragen. Der zweite Bitstrom mit den nach UMTS-Standard kanalkodierten Sprachdaten und Signalisierungsdaten wird von der vierten Sende-/Empfangsantenne 85 empfangen und über die vierte Sende-/Empfangseinheit 90 dem zweiten Kanaldekodierer 95 zugeführt. Der zweite Kanaldekodierer 95 führt eine Kanaldekodierung der Sprachdaten und der Signalisierungsdaten des zweiten Bitstroms nach UMTS-Standard durch. Die Auswerteeinheit 100 detektiert dabei die kanaldekodierten Signalisierungsdaten, die ja bekanntlich Informationen über die Art der Quellkodierung der empfangenen Sprachdaten des zweiten Bitstroms umfassen. Im vorliegenden Beispiel extrahiert die Auswerteeinheit 100 aus den kanaldekodierten Signalisierungsdaten des zweiten Bitstroms, dass die Sprachdaten des zweiten Bitstroms nach GSM-Standard quellkodiert sind. Die Auswerteeinheit 100 steuert daher den Schalter 105 derart an, dass der zweite Kanaldekodierer 95 mit dem ersten Queildekodierer 30 verbunden wird, der als Sprachdekodierer nach GSM-Standard ausgebildet ist. Für den Fall, dass die Auswerteeinheit 100 aus den empfangenen und kanaldekodierten Signalisierungsdaten des zweiten Bitstroms extrahiert, dass die Sprachdaten des zweiten Bitstroms nach UMTS-Standard quellkodiert sind, steuert sie den Schalter 105 derart an, dass er gemäß der gestrichelten Darstellung in der Figur den zweiten Kanaldekodierer 95 mit dem zweiten Quelldekodierer 110 verbindet, der dann als Sprachdekodierer nach UMTS-Standard ausgebildet ist. Da gemäß den beschriebenen Ausführungsbeispiel die Sprachdaten des zweiten Bitstromes nach GSM-Standard quellkodiert sind, wird der zweite Kanaldekodierer 95 mit dem ersten Sprachdekodierer 30 verbunden und die im zweiten Kanaldekodierer 95 kanal-dekodierten Sprachdaten werden im ersten Sprachdekodierer 30 quelldekodiert. Die am Ausgang des ersten Sprachdekodierers 30 beziehungsweise des zweiten Sprachdekodierers 110 anliegenden kanal- und quelldekodierten Sprachsignale werden dann zur Weiterverarbeitung weiteren in der Figur nicht dargestellten Funktionsblöcken zugeführt.

Die Signalisierungsdaten können von der Zwischenstation 15 zur zweiten Mobilstation 5 auch ein- oder mehrmalig über einen separaten Kontrollkanal getrennt von den Nutzdaten übertragen werden und wiederum die Rufnummer der rufenden ersten Mobilstation 1 umfassen, anhand der die Auswerteeinheit 100 ebenfalls zum Anschluss des ersten Sprachdekodierers 30 an den zweiten Kanaldekodierer 95 veranlasst werden kann.

Anstelle oder zusätzlich zu den Sprachdaten können als Nutzdaten zumindest auch Video- und/oder Audiodaten und/oder Textdaten von der ersten Mobilstation 1 zur zweiten Mobilstation 5 in der beschriebenen Weise und gemeinsam in einem Bitstrom übertragen werden. Die Übertragung im ersten Telekommunikationsnetz 10 und im zweiten Telekommunikations- netz 20 kann dabei beispielsweise frequenz- oder zeitmultiplex erfolgen, wobei für die beiden verschiedenen Telekommunikationsnetze 10, 20 unterschiedliche Multiplexverfahren zur Anwendung kommen können. In diesem Falle wäre in der Zwischenstation 15 beispielsweise auch eine Umsetzung von Zeit- in Frequenzmultiplex oder umgekehrt zu realisieren. Es können auch beliebige andere Multiplex- oder Kanalzugriffsverfahren zur Anwendung kommen.

Mit dem erfindungsgemäßen Verfahren ist es somit beispielsweise möglich, nach dem GSM-Standard quellkodierte Nutzdaten über eine Datenverbindung nach UMTS-Standard zu übertragen. Auf diese Weise kann eine Anforderung an den UMTS-Standard als Mobilfunkstandard der dritten Generation erfüllt werden, eine Rückwärtskompatibilität zum bestehenden GSM-Standard als Mobilfunkstandard der zweiten Generation sicherzustellen, um Nutzdaten zwischen Mobilstationen nach dem GSM-Standard und Mobilstationen nach dem UMTS-Standard über eine Mobilfunkverbindung auszutauschen. Das erfindungsgemäße Verfahren vereinfacht dabei die Nutzdatenübertragung zwischen Mobilstationen, die nach GSM-Standard realisiert sind, und solchen Mobilstationen, die sowohl nach GSM-Standard als auch nach UMTS-Standard realisiert sind, wobei für den Teil der Datenübertragung vom entsprechenden Telekommunikationsnetz zu der sowohl nach GSM-Standard als auch nach UMTS-Standard realisierten Mobilstation die UMTS-Luftschnittstelle benutzt wird. Dabei liegen die Nutzdaten bei der sowohl nach GSM-Standard als auch nach UMTS-Standard realisierten Mobilstation in einer Qualität vor, die nicht durch eine Transkodierung zwischen einem Quellcode nach GSM-Standard und einem Quellcode nach UMTS-Standard herabgesetzt wurde.

Das erste Telekommunikationsnetz 10 und das zweite Telekommunikationsnetz 20 können jeweils auch als hybrides GSM-/UMTS-Netz ausgebildet sein, welches die Funktionalität eines GSM-Netzes und eines UMTS-Netzes vereint. Das erste Telekommunikationsnetz 10 und das zweite Telekommunikationsnetz 20 können dabei auch identisch sein.

Es kann auch vorgesehen sein, dass die Nutzdaten vom ersten Telekommunikationsnetz 10 über ein oder mehrere beliebige Festnetze und gegebenenfalls entsprechende Zwischenstationen an das zweite Telekommunikationsnetz 20 und von dort an die zweite Mobilstation 5 übertragen werden, wobei eine Transkodierung bezüglich des Quellkodes der Nutzdaten, also eine Quelldekodierung und erneute Quellkodierung in den entsprechenden Zwischenstationen nicht erfolgt, sondern lediglich eine Kanaldekodierung und gegebenenfalls eine erneute Kanalkodierung.

Als erster Mobilfunkstandard kann beispielsweise auch der in Nordamerika vorgesehene Standard IS95, (Interim Standard 95), der in Japan vorgesehene Standard PDC, (Personal Digital Cellular), oder dergleichen gewählt werden.

## Patentansprüche

1. Zwischenstation (15) zur Übertragung von digitalen Nutzdaten von einer ersten Mobilstation (1) zu einer zweiten Mobilstation (5), wobei die Zwischenstation (15) aufweist:
- eine Empfangseinheit (55) für den Empfang von Nutzdaten, die von der ersten Mobilstation (1) für die Übertragung in einem ersten Telekommunikationsnetz (10) nach einem ersten Mobilfunkstandard in einer ersten Stufe quellkodiert und in einer zweiten Stufe kanalkodiert sind,
- einen mit der Empfangseinheit (55) verbundenen und als Kanaldekodierer ausgebildeten Dekodierer (60) zu einer Kanaldekodierung der empfangenen Nutzdaten in der zweiten Stufe nach dem ersten Mobilfunkstandard,
- einen mit dem Dekodierer (60) gekoppelten und als Kanalkodierer ausgebildeten Kodierer (70) zu einer Kanalkodierung nach einem zweiten Mobilfunkstandard in einer zweiten Stufe der nach dem ersten Mobilfunkstandard kanaldekodierten Nutzdaten für die Übertragung in einem zweiten Telekommunikationsnetz (20),
- und eine mit dem Kodierer (70) verbundene Sendeeinheit (75) zum Senden der nach dem zweiten Mobilfunkstandard kanalkodierten Nutzdaten in einem Bitstrom über einen Übertragungskanal des zweiten Telekommunikationsnetzes (20) zur zweiten Mobilstation (5),
**dadurch gekennzeichnet, dass** die Zwischenstation (15) eine Steuerung (65) aufweist, die eingerichtet ist, Signalisierungsdaten in den Bitstrom einzubetten, wobei die Sendeeinheit (75) eingerichtet ist, die Signalisierungsdaten an die zweite Mobilstation (5) zu übertragen, wobei die Zwischenstation (15) eingerichtet ist, die Rufnummer der ersten Mobilstation (1) zu empfangen, wobei die Signalisierungsdaten Informationen über die Art der Kodierung der Nutzdaten in der ersten Stufe nach dem ersten Mobilfunkstandard in Form der Rufnummer der ersten Mobilstation (1) enthalten, anhand der eine Auswerteeinheit (100) in der zweiten Mobilstation (5) zum Anschluss eines entsprechenden Quelldekodierers (30) an einen zweiten Kanaldekodierer (95) veranlasst werden kann, **und dass** die Zwischenstation (15) eingerichtet ist, die Signalisierungsdaten ein- oder mehrmalig über einen separaten Kontrollkanal getrennt von den Nutzdaten an die zweite Mobilstation (5) zu übertragen.

2. Zwischenstation (15) nach Anspruch 1, **dadurch gekennzeichnet, dass** die Zwischenstation (15) eingerichtet ist, die Nutzdaten zumindest als Video- und/oder Audio- und/oder Text- und/oder Sprachdaten zu empfangen und zu übertragen.

3. Zwischenstation (15) nach Anspruch 1 oder 2, **dadurch gekennzeichnet, dass** die Zwischenstation (15) eingerichtet ist, die Signalisierungsdaten an die zweite Mobilstation (5) zu übertragen, wobei die Signalisierungsdaten Informationen über die Art der Kodierung der Nutzdaten in der ersten Stufe nach dem GSM-Standard in Form der Rufnummer der ersten Mobilstation (1) enthalten.

4. Zwischenstation (15) nach Anspruch 2 oder 3, **dadurch gekennzeichnet, dass** die Zwischenstation (15) eingerichtet ist, die Nutzdaten zu empfangen, die in der ersten Mobilstation (1) durch einen Sprachkodierer (25) nach dem GSM-Standard ITU-T G.729 in der ersten Stufe quellkodiert wurden, und dass die Zwischenstation (15) eingerichtet ist, die Nutzdaten zu senden, die in der zweiten Mobilstation (5) durch einen Sprachdekodierer (30) nach dem GSM-Standard ITU-T G.729 in der ersten Stufe quelldekodiert werden.

## Claims

1. Intermediate station (15) for transmitting digital user data from a first mobile station (1) to a second mobile station (5), wherein the intermediate station (15) has:
- a reception unit (55) for receiving user data that are source-coded in a first stage, and channel-coded in a second stage, by the first mobile station (1) for transmission in a first telecommunication network (10) on the basis of a first mobile radio standard,
- a decoder (60), which is connected to the reception unit (55) and in the form of a channel decoder, for channel-decoding the received user data in the second stage on the basis of the first mobile radio standard,
- a coder (70), which is coupled to the decoder (60) and in the form of a channel coder, for channel-coding, on the basis of a second mobile radio standard, in a second stage, the user data channel-decoded on the basis of the first mobile radio standard, for transmission in a second telecommunication network (20),
- and a transmission unit (75), connected to the coder (70), for sending the user data channel-coded in a bitstream on the basis of the second mobile radio standard to the second mobile station (5) via a transmission channel of the second telecommunication network (20),
**characterized in that** the intermediate station (15) has a controller (65) which is arranged to embed signalling data into the bitstream, wherein the transmission unit (75) is set up to transmit the signalling data to the second mobile station (5), wherein the intermediate station (15) is arranged to receive the telephone number of the first mobile station (1), wherein the signalling data include information about the type of the coding of the user data in the first stage on the basis of the first mobile radio standard in the form of the telephone number for the first mobile station (1), according to which an analysis unit (100) can be authorized to connect a corresponding source decoder (30) to a second channel decoder (95) in the second mobile station (5) and **in that** the intermediate station (15) is set up to transmit the signalling data to the second mobile station (5) once or repeatedly via a separate control channel separately from the user data.

2. Intermediate station (15) according to Claim 1, **characterized in that** the intermediate station (15) is set up to receive and transmit the user data at least as video and/or audio and/or text and/or voice data.

3. Intermediate station (15) according to Claim 1 or 2, **characterized in that** the intermediate station (15) is set up to transmit the signalling data to the second mobile station (5), wherein the signalling data include information about the type of the coding of the user data in the first stage on the basis of the GSM standard in the form of the telephone number of the first mobile station (1).

4. Intermediate station (15) according to Claim 2 or 3, **characterized in that** the intermediate station (15) is set up to receive the user data that have been source-coded in the first mobile station (1) by a voice coder (25) on the basis of the GSM standard ITU-T G.729 in the first stage, and **in that** the intermediate station (15) is set up to send the user data that have been source-decoded in the second mobile station (5) by a voice decoder (30) on the basis of the GSM standard ITU-T G.729 in the first stage.

## Revendications

1. Station intermédiaire (15) destinée à transmettre des données utiles numériques d'une première station mobile (1) à une deuxième station mobile (5), dans laquelle la station intermédiaire (15) comprend :
- une unité de réception (55) destinée à recevoir des données utiles qui sont soumises à un codage de source dans un premier étage et à un codage de canal dans un deuxième étage par la première station mobile (1) pour leur transmission dans un premier réseau de télécommunication (10) conformément à une première norme radio mobile,
- un décodeur (60), connecté à l'unité de réception (55) et réalisé sous la forme d'un décodeur de canal, destiné à effectuer un décodage de canal des données utiles reçues dans le deuxième étage conformément à la première norme radio mobile,
- un codeur (70), couplé au décodeur (60) et réalisé sous la forme d'un codeur de canal, destiné à effectuer un codage de canal conformément à une deuxième norme radio mobile, dans un deuxième étage, des données utiles soumises à un codage de canal conformément à la première norme radio mobile pour leur transmission dans un deuxième réseau de télécommunication (20),
- et une unité d'émission (75), connectée au codeur (70), destinée à émettre les données utiles soumises à un codage de canal conformément à la deuxième norme radio mobile dans un train de bits par l'intermédiaire d'un canal de transmission du deuxième réseau de télécommunication (20) à une deuxième station mobile (5),
**caractérisée en ce que** la station intermédiaire (15) comporte une unité de commande (65) qui est conçue pour incorporer des données de signalisation dans le train de bits, dans laquelle l'unité d'émission (75) est conçue pour transmettre les données de signalisation à la deuxième station mobile (5), dans laquelle la station intermédiaire (15) est conçue pour recevoir le numéro d'appel de la première station mobile (1) dans laquelle les données de signalisation contiennent des informations concernant le type du codage des données utiles dans le premier étage conformément à la première norme radio mobile sous la forme du numéro d'appel de la première station mobile (1), sur la base duquel une unité d'évaluation (100) de la deuxième station mobile (5) peut être amenée à connecter un décodeur de source (30) à un deuxième décodeur de canal (95) et **en ce que** la station intermédiaire (15) est conçue pour transmettre une seule fois ou plusieurs fois les données de signalisation, séparément des données utiles, par l'intermédiaire d'un canal de commande séparé à la deuxième station mobile (5).

2. Station intermédiaire (15) selon la revendication 1, **caractérisée en ce que** la station intermédiaire (15) est conçue pour recevoir et transmettre les données utiles au moins sous la forme de données vidéo et/ou audio et/ou textuelles et/ou vocales.

3. Station intermédiaire (15) selon la revendication 1 ou 2, **caractérisée en ce que** la station intermédiaire (15) est conçue pour transmettre les données de signalisation à la deuxième station mobile (5), dans laquelle les données de signalisation contiennent des informations concernant le type du codage des données utiles dans le premier étage conformément à la norme GSM sous la forme du numéro d'appel de la première station mobile (1).

4. Station intermédiaire (15) selon la revendication 2 ou 3, **caractérisée en ce que** la station intermédiaire (15) est conçue pour recevoir les données utiles qui ont été soumises à un codage de source dans la première station mobile (1) par un codeur vocal (25) conformément à la norme ITU-T G.729 dans le premier étage, et **en ce que** la station intermédiaire (15) est conçue pour émettre les données utiles qui ont été soumises à un décodage de source dans la deuxième station mobile (5) par un décodeur vocal (30) conformément à la norme GSM ITU-T G.729 dans le premier étage.
